# EUROPEAN PATENT APPLICATION

(11) **EP 4 632 934 A1**
(43) Date of publication of application: **15.10.2025**
(21) Application number: 23933802.3
(22) Date of filing: 08.11.2023
(51) Int. Cl.: H01M 50/449, H01M 50/403, H01M 10/0525, H01M 10/42

(54) **COMPOSITE SEPARATOR, AND PREPARATION METHOD THEREFOR AND USE THEREOF**

(30) Priority: 17.04.2023 CN 202310409267
(71) Applicant: Contemporary Amperex Technology Co., Limited, Ningde, Fujian 352100 (CN)
(72) Inventor: YANG, Jian, Ningde, Fujian 352100 (CN); WANG, Zhaoguang, Ningde, Fujian 352100 (CN); WANG, Yaohui, Ningde, Fujian 352100 (CN); YANG, Jianrui, Ningde, Fujian 352100 (CN); HUANG, Siying, Ningde, Fujian 352100 (CN); SUN, Chengdong, Ningde, Fujian 352100 (CN); OUYANG, Chuying, Ningde, Fujian 352100 (CN)
(74) Representative: Kraus & Lederer PartGmbB
(86) International application number: PCT/CN2023/130534
(87) International publication number: WO 2024/216935

(57) **Abstract**

Disclosed are a composite separator, and a preparation method therefor and the use thereof. The composite separator comprises at least one base film layer and a self-healing functional layer laminated on a surface of the base film layer, wherein the self-healing functional layer contains a thermally cyclopolymerizable precursor material, and/or after the self-healing functional layer has self-healed, the precursor material forms a crosslinked polymer structure. The surface of the base film layer of the composite separator of the present application is provided with a self-healing functional layer, and the composite separator functions to isolate the positive electrode plate from the negative electrode plate and conduct lithium ions while blocking electrons when the secondary battery is under normal working conditions. When overheating or thermal runaway occurs inside the secondary battery, the precursor material in the self-healing functional layer undergoes a thermal polymerization reaction to generate a high-temperature-resistant and high-mechanical-strength crosslinked polymer, and the crosslinked polymer not only plays a role in supporting the separator but can also suppress irreversible deformations such as thermal pore closure and thermal shrinkage of the base film; in addition, the spatial structure of the crosslinked polymer also has a repairing effect on damage to a local pore structure of the base film.

## Description

The present application claims priority to the Chinese patent application No. 202310409267.5 filed to the China National Intellectual Property Administration on April 17, 2023 and entitled "COMPOSITE SEPARATOR, AND PREPARATION METHOD THEREFOR AND USE THEREOF", the entire content of which is incorporated into the present application by reference.

### TECHNICAL FIELD

The present application relates to the technical field of batteries, and particularly relates to a composite separator and a preparation method therefor and the use thereof.

### BACKGROUND

The statements provided here are intended solely to offer background information relevant to the present application and do not necessarily constitute the prior art. Lithium-ion batteries have attracted significant attention due to the characteristics of high energy density, high volumetric density, and reusability. With the continuous advancement and development of lithium-ion battery technology, they have been applied to many fields such as digital electronic products, energy storage, power, and new-energy vehicles. One of the important factors that determine the performance and safety of a lithium-ion battery is the performance of its electrode material, and the other important factor is the battery separator. The separator is an extremely critical component of a lithium-ion battery. The separator is an electrically insulating thin film with a porous structure and serves to isolate a positive electrode from a negative electrode in a battery, preventing free passage of electrons in the battery while also enabling ions to freely pass between the positive and negative electrodes. As a key component of lithium-ion battery cells, the performance of the separator determines the battery's interface structure, internal resistance, etc., and directly affects the properties of the battery, such as capacity, cycling and safety performance. A separator with excellent performance has an important function to improve the battery's comprehensive performance.

Under high temperature or cell thermal runaway conditions, the battery separator undergoes irreversible structural changes such as thermal shrinkage, deformation, and pore closure, which compromise the structure of the separator. Severe thermal runaway may even lead to severe rupture or shrinkage and melting of the separator, causing contact between the positive and negative electrode plates, which results in a large short-circuit current and the release of substantial heat, directly impacting the electrochemical performance of the cell.

### SUMMARY OF THE INVENTION

An object of an embodiment of the present application is to provide a composite separator, a preparation method therefor, and the use thereof, in order to addressing technical problems including, without limitation, under high temperature or cell thermal runaway conditions, current separators undergoing irreversible structural changes such as thermal shrinkage, deformation, and pore closure, which compromise the structure of the separators, causing contact between positive and negative electrode plates, which results in a large short-circuit current and the release of substantial heat, thereby impacting the electrochemical performance of the cell.

In the embodiments of the present application, the technical solutions as follows are used:
In a first aspect, a composite separator is provided, which comprises at least one base film layer and a self-healing functional layer laminated on a surface of the base film layer, wherein the self-healing functional layer contains a thermally cyclopolymerizable precursor material, and/or after the self-healing functional layer has self-healed, the precursor material forms a crosslinked polymer structure.

In a second aspect, a method for preparing a composite separator is provided, the method including the following steps:
preparing a self-healing slurry, wherein the self-healing slurry comprises a thermally cyclopolymerizable precursor material; and
obtaining at least one base film and applying the self-healing slurry to a surface of the base film to form a self-healing functional layer, thereby obtaining a composite separator; and after the self-healing functional layer has self-healed, the precursor material forms a crosslinked polymer structure.

In a third aspect, the present application provides a secondary battery, comprising a positive electrode, a negative electrode, a separator, and an electrolyte solution, wherein the separator comprises the above composite separator or the composite separator prepared by the above method.

In a fourth aspect, the present application further provides an electrical device, comprising the above secondary battery.

The beneficial effects of the composite separator provided by the embodiments of the present application are as follows: when the composite separator is applied to a cell, the composite separator functions to isolate a positive electrode plate from a negative electrode plate and conduct lithium ions while blocking electrons under the normal working condition of the cell. The thermally cyclopolymerizable precursor material in the self-healing functional layer on the surface of the base film layer is electrochemically stable and does not affect the electrochemical performance of the cell. When the internal temperature of the cell increases, the precursor material in the self-healing functional layer undergoes thermal cyclopolymerization under high temperature or cell thermal runaway conditions, thereby forming a crosslinked polymer structure in situ on the surface of the base film layer. That is, after the self-healing functional layer has self-healed,the precursor material forms a crosslinked polymer structure. The crosslinked polymer structure plays an effective supporting role for the base film layer and can effectively prevent the base film layer from structural changes such as thermal shrinkage, deformation and pore closure under high temperature or cell thermal runaway conditions and repair these structural changes. Thus, the composite separator has a self-healing function and results in a protective effect on the separator. By maintaining the pore structure of the separator unchanged, the current and heat generation in the cell can be maintained within normal ranges, so as to avoid further contact between the positive and negative electrodes to form a short circuit due to damage and changes in the separator, thus preventing the short-circuit current from increasing and preventing further deterioration of thermal runaway. Moreover, the polymer layer formed after the thermal cyclopolymerization of the precursor material has the characteristics of thermal stability, insulativity, low swelling rate, high toughness, etc., is beneficial for enhancing the properties such as toughness, mechanical strength, and thermal stability of the composite separator, and provides an excellent thermal protective effect on both the composite separator and the cell system in which it is applied.

### BRIEF DESCRIPTION OF DRAWINGS

In order to explain the technical solution in the embodiments of the present application more clearly, the accompanying drawings needed in the description of the embodiments or demonstration technical descriptions will be briefly introduced below. Obviously, the accompanying drawings in the following description are only some embodiments of the application. For a person of ordinary skill in the art, other drawings can be obtained according to these accompanying drawings without creative work.
FIG. 1 is a schematic structural diagram of a composite separator according to an example of the present application;
FIG. 2 is a schematic structural diagram of a composite separator according to an example of the present application;
FIG. 3 is a schematic structural diagram of a composite separator according to an example of the present application;
FIG. 4 is a schematic structural diagram of a composite separator according to an example of the present application;
FIG. 5 is a schematic structural diagram of a composite separator according to an example of the present application;
FIG. 6 is a schematic structural diagram of a composite separator according to an example of the present application;
FIG. 7 is a schematic structural diagram of a composite separator according to an example of the present application;
FIG. 8 is a schematic flowchart diagram of a method for preparing a composite separator in an example of the present application;
FIG. 9 is a schematic structural diagram of an embodiment of a battery cell according to an example of the present application;
Fig. 10 is a schematic exploded diagram of the battery cell as shown in FIG. 9;
FIG. 11 is a schematic structural diagram of an embodiment of a battery module according to an example of the present application;
FIG. 12 is a schematic structural diagram of an embodiment of a battery pack according to an example of the present application;
FIG. 13 is a schematic exploded structural diagram of the battery pack as shown in FIG. 9; and

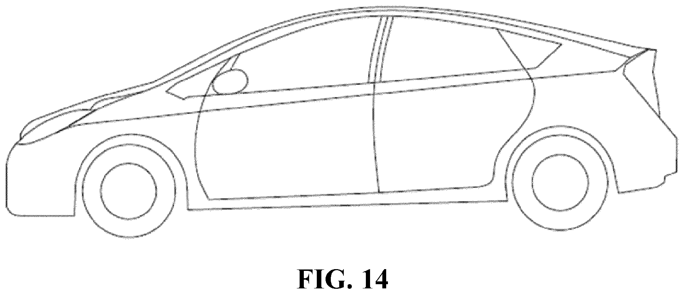

FIG. 14 is a schematic diagram of an embodiment of a electrical apparatus with a secondary battery according to an example of the present application as a power source.

Reference numerals in Detailed Description are as follows:
1. base film;
2. self-healing functional layer;
3. battery cell; 31. case; 32. electrode assembly; 33. cover plate;
4. battery module;
5. battery pack; 51. box; and 52. lower box.

### DETAILED DESCRIPTION

In order to make the object, technical solutions and advantages of the present application clearer, the present application will be described in further detail below in conjunction with the drawings and examples. It should be understood that the specific embodiments described herein are merely used to explain the present invention but are not intended to limit the present application.

Unless otherwise defined, all technical and scientific terms used herein have the same meanings as commonly understood by those skilled in the technical field to which the present application belongs. The terms used herein are intended only for the purpose of describing specific embodiments and are not intended to limit the present application. The terms "include" and "have" and any variations thereof in the specification and the claims of the present application and in the above Description of Drawings are intended to encompass non-exclusive inclusion.

In the description of the embodiments of the present application, the technical terms "first," "second," and the like are used only to distinguish between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

The weights of relevant components mentioned in the specification of embodiments of the present application can not only indicate the contents of the components, but also can denote the proportional relation of the weights of the components. Therefore, the specific contents of relevant components scaled up or down in accordance with those defined in the specification of the embodiments of the present application fall within the scope disclosed in the specification of the embodiments of the present application. Specifically, the mass in the description of the examples of the present application can be in units commonly known in the field of chemical engineering, such as µg, mg, g, and kg.

In the descriptions of the embodiments of the present application, the term "multiple" refers to more than two (including two), and similarly, "multiple groups" refers to more than two groups (including two groups); and "multiple pieces" refers to more than two pieces (including two pieces).

The term "gas permeability" refers to the extent to which the separator allows a gas to pass through, and the value thereof can be obtained by measuring the size of the permeation amount of the gas per unit volume or cross-sectional area per unit time under a specific pressure condition. The unit is S/100 mL, indicating the time required for every 100 ml of the gas to pass through.

The term "porosity" refers to the percentage of the pore volume in the separator relative to the total volume of the material in the natural state.

The term "thermal shrinkage" refers to the volume change of the separator due to its inherent thermal expansion rate, which is the primary cause of shrinkage.

The term "thermal cyclopolymerization" refers to a polymerization reaction by which a non-conjugated diene compound forms a linear polymer having cyclic structural repeat units under heating conditions.

For ease of description, the following embodiments of the present application are illustrated with a composite separator and a preparation method therefor and the use thereof as examples.

In a first aspect, an embodiment of the present application provides a composite separator, which comprises at least one base film layer and a self-healing functional layer laminated on a surface of the base film layer, wherein the self-healing functional layer contains a thermally cyclopolymerizable precursor material, and/or after the self-healing functional layer has self-healed, the precursor material forms a crosslinked polymer structure.

In the composite separator of the embodiment of the present application, the base film layer refers to a material layer used to isolate the positive electrode plate from the negative electrode plate in a battery, preventing short circuits caused by direct contact between the positive and negative electrode plates. Electrons within the battery cannot freely pass through the base film layer, but ions within the battery can freely pass through the base film layer, thereby enabling the ions to move freely between the positive and negative electrodes.

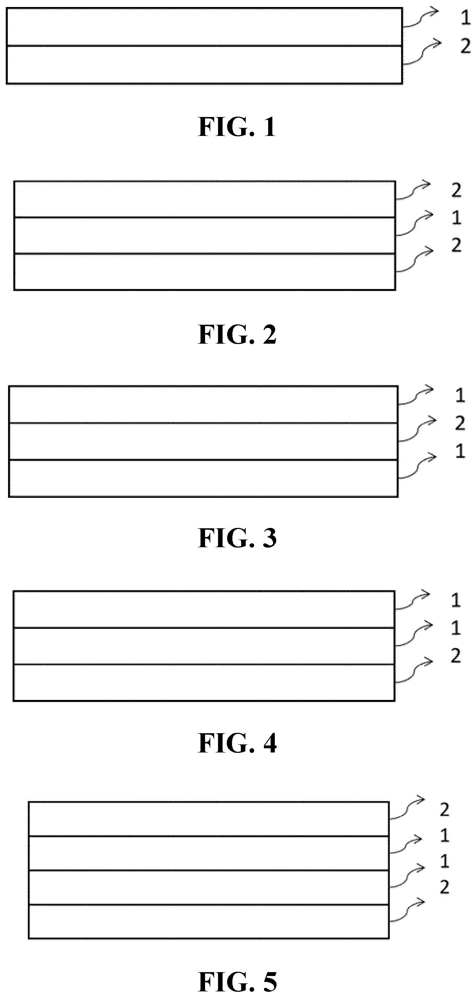

In the composite separator of the embodiment of the present application, the base film layer has at least the following structure:
In an embodiment, the base film layer can be a single-layer structure, in which case the self-healing functional layer 2 is arranged on one side surface of the base film 1, as shown in FIG. 1.

In an embodiment, the self-healing functional layer 2 is arranged on both side surfaces of the base film 1, as shown in FIG. 2.

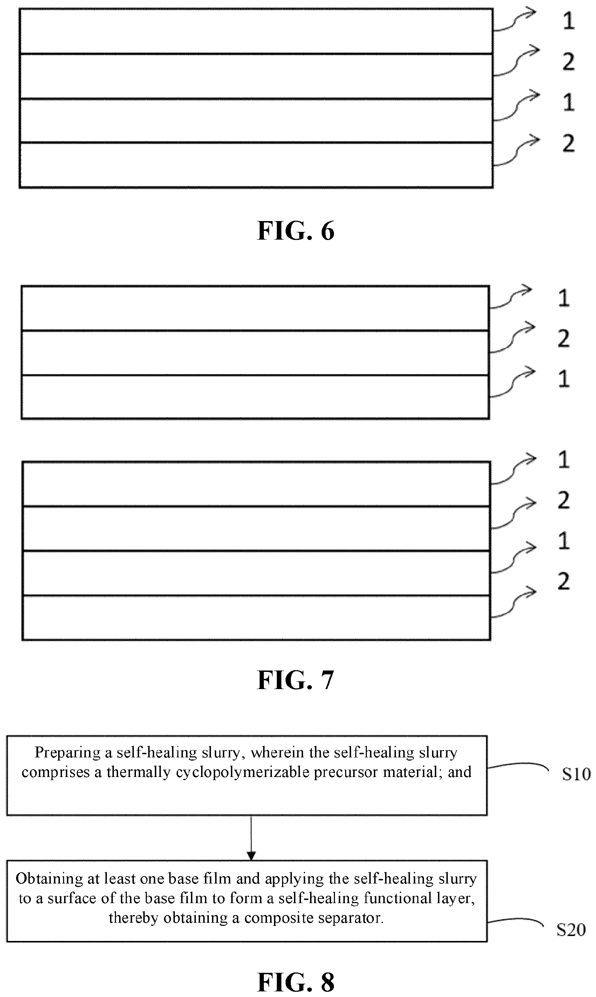

In an embodiment, the base film layer may also be a double-layer structure, in which case the self-healing functional layer 2 may be arranged between two base films 1 as an interlayer, as shown in FIG. 3. The self-healing functional layer 2 may also be arranged on an outer surface of the outermost base film 1, as shown in FIG. 4. Alternatively, the self-healing functional layer 2 is arranged on both outer surfaces of the outermost base film 1, as shown in FIG. 5. The self-healing functional layer 2 may also be arranged both between the two base films 1 and on the outer surface of the outermost base film 1, as shown in FIG. 6.

In an embodiment, the base film layer may also be a multilayer structure, in which case the self-healing functional layer 2 may be arranged between two adjacent base films 1, and a plurality of self-healing functional layers 2 may be arranged within the base film layer. Alternatively, the self-healing functional layer may also be arranged on one side outer surface or both side outer surfaces of the outermost base film 1, as shown in FIG. 7.

The structure and number of layers of the composite separator in the embodiments of the present application can be flexibly designed according to actual application requirements, thereby meeting the performance requirements of different battery systems for separators.

Thus, the composite separator of the embodiments of the present application provides at least the following beneficial effects:
Firstly, the composite separator comprises at least one base film layer and a self-healing functional layer laminated on a surface of the base film layer, wherein the self-healing functional layer contains a thermally cyclopolymerizable precursor material. The precursor material forms the self-healing functional layer on the surface of the base film layer, so that the contribution of the functional layer to the significant increase of the weight of the composite separator by the functional layer can be reduced, thereby avoiding the excessive self-weight of the composite separator caused by the introduction of the functional layer, which affects the application of the separator in a battery system. When the composite separator is applied to a cell, the composite separator functions to isolate a positive electrode plate from a negative electrode plate and conduct lithium ions while blocking electrons under the normal working condition of the cell. The thermally cyclopolymerizable precursor material in the self-healing functional layer on the surface of the base film layer is electrochemically stable and does not affect the electrochemical performance of the cell.

Secondly, when the internal temperature of the cell increases, the precursor material in the self-healing functional layer undergoes thermal cyclopolymerization under high temperature or cell thermal runaway conditions, thereby forming a crosslinked polymer structure in situ on the surface of the base film layer. That is to say, after the self-healing functional layer has self-healed, the precursor material forms a crosslinked polymer structure. The crosslinked polymer structure plays an effective supporting role for the base film layer and can effectively prevent the base film layer from structural changes such as thermal shrinkage, deformation and pore closure under high temperature or cell thermal runaway conditions and repair these structural changes. Thus, the composite separator has a self-healing function and results in a protective effect on the separator. By maintaining the pore structure of the separator unchanged, the current and heat generation in the cell can be maintained within normal ranges, so as to avoid further contact between the positive and negative electrodes to form a short circuit due to damage and changes in the separator, thus preventing the short-circuit current from increasing and preventing further deterioration of thermal runaway.

Thirdly, the polymer layer formed after the thermal cyclopolymerization of the precursor material has the characteristics of thermal stability, insulativity, low swelling rate, high toughness, etc., is beneficial for enhancing the properties such as toughness, mechanical strength, and thermal stability of the composite separator, and provides an excellent thermal protective effect on both the composite separator and the cell system in which it is applied.

**In** some specific embodiments, the base film layer comprises a double-layer base film, and the self-healing functional layer is arranged on the outer surface of the base film layer. **In** this case, when the base film layer is a double-layer structure, the self-healing functional layer, when arranged on the outer surface of the base film layer, can better improve the self-healing effect on the base film layer, promptly repair structural changes such as thermal shrinkage deformation and pore closure of the base film, and improve the properties such as toughness, mechanical strength, and thermal stability of the composite separator.

**In** some possible embodiments, the precursor material undergoes a cyclopolymerization reaction upon heating in an environment having a temperature of 80-500°C. At a temperature of 80-500°C, the precursor material in the self-healing functional layer can undergoe a cyclopolymerization reaction upon heating to form a crosslinked polymer structure, which further develops into a crosslinked network structure. The cyclization temperature varies among different precursor materials. In practical applications, appropriate cyclization conditions should be established based on the physicochemical properties of the precursor material. Additionally, the environmental temperature range of 80-500°C in the embodiments of the present application encompasses the temperature for the baking procedure in which the composite separator is assembled into the cell, the temperature that can be reached by heat generated when the battery runs normally, and the temperature conditions that can be achieved in the event of thermal runaway of the battery. Therefore, after the composite separator is applied to the cell, the precursor material in the self-healing functional layer can undergo a thermal cyclopolymerization reaction to form a crosslinked polymer structure under conditions such as the cell baking procedure, the stage of heat generation when the battery runs, or cell thermal runaway. A thermal protective layer is formed on the surface of the base film layer to improve the properties such as toughness, mechanical strength, and heat resistance of the composite separator.

By way of example, the precursor material undergoes a cyclopolymerization reaction when heated in environments having temperatures of 80-100°C, 100-120°C, 120-150°C, 150-200°C, 200-250°C, 250-300°C, 300-350°C, 350-400°C, 400-450°C, 450-500°C, 100-400°C, and 200-300°C.

In some possible embodiments, the precursor material undergoes a cyclopolymerization reaction upon heating in an environment having a temperature of 120-250°C. In this case, the precursor material in the self-healing functional layer undergoes cyclopolymerization upon heating in an environment having 120-250°C, thereby effectively ensuring that the precursor material can fully undergo cyclopolymerization to form a crosslinked polymer structure layer under conditions of battery thermal runaway. By way of example, the temperature at which the precursor material undergoes cyclopolymerization upon heating may be 120-150°C, 150-180°C, 180-200°C, 200-220°C, 220-250°C, etc.

In some possible embodiments, the precursor material includes at least one of an aryl ether, an arylalkene compound, and an arylsilane monomer. These precursor materials can all undergo thermal cyclopolymerization under high temperature or cell thermal runaway conditions to form a crosslinked polymer network structure, which has a protective effect on the base film. Moreover, these precursor materials all contain aryl structures. Aromatic rings in the crosslinked polymer layer formed after thermal cyclopolymerization can increase the mechanical properties and thermal stability of the polymer, so that the polymer layer containing the aromatic rings has excellent mechanical strength and thermal stability and other properties. In addition, the precursor material also contains functional groups such as ether bonds and silane bonds, which can increase the flexibility of the crosslinked polymer after thermal cyclopolymerization, thereby improving the flexibility and toughness of the composite separator. After being applied to a cell, it is helpful for the composite separator to cope with the volume expansion/deformation of electrodes during the charging and discharging process.

In some possible embodiments, the aryl ether includes at least one of a diarylmethane sulfide compound, an aryl disulfide, and a fluorine-containing aryl vinyl ether compound. The general structural formula of these aryl ethers can be represented as Ar-O-Ar' or Ar-O-R, wherein Ar and Ar' are each an aromatic group, R is alkyl, and - represents a chemical bond for linkage. These aryl ether precursor materials can all undergo a thermal cyclopolymerization reaction under high temperature or cell thermal runaway conditions. On the one hand, the formed crosslinked polymer network structure contains aryl ring groups, which can increase the mechanical properties and thermal stability of the polymer. On the other hand, the ether bond contained therein can increase the flexibility of the molecular chain of the polymer, thereby ensuring the flexibility and toughness of the polymer after being composited with the base film and ensuring the toughness of the composite separator. It addition, it also contains elements such as fluorine, which can improve the solvent resistance and oil resistance of the polymer, thereby reducing the swelling rate of the composite separator and improving the liquid absorption effect thereof.

In some possible embodiments, the arylalkene compound includes at least one of a fluorinated vinyl aryl ether, a γ-hydroxyalkyl enol ether, and a bromobenzene derivative. Among them, the bromobenzene derivative includes, but is not limited to, a series of bromobenzene derivatives generated by the reaction of ortho-lithiumbromobenzene with the electrophile acetophenone. These arylalkene compound precursor materials undergo a thermal cyclopolymerization reaction under high temperature or cell thermal runaway conditions to form a crosslinked spatial network structure that contains aryl ring groups, which can increase the mechanical properties and thermal stability of the polymer. Not only is the supporting effect of the self-healing functional layer on the base film favorably enhanced, but also irreversible structural changes such as thermal shrinkage, deformation and pore closure in the base film layer caused under high temperature or cell thermal runaway conditions can be prevented and repaired, thus resulting in a protective effect on the base film layer. By maintaining the pore structure of the separator unchanged, the current and heat generation in the cell can be maintained within normal ranges, so as to avoid further contact between the positive and negative electrodes to form a short circuit due to damage and changes in the separator, effectively preventing the short circuit and deterioration in the cell, thus offering a good thermal protective effect on the cell.

In some possible embodiments, the arylsilane monomer includes at least one of [4-trifluorovinyl aryl ether]methyldiethoxysilane, 1,2,3,3,4,4-hexafluoro-1,2-bis[4-(dimethylsilyl)aryl ether]cyclobutane, and 1,1,3,3-tetramethyl-1,3-bis[4-trifluorovinyl aryl ether]disiloxane. These arylsilane monomer precursors undergo a thermal cyclopolymerization reaction under high temperature or cell thermal runaway conditions to form a crosslinked network structure of a fluorine-containing polyarylsiloxane-based macromonomer. This organosilane-based macromonomer has excellent thermal and insulating properties, high mechanical strength and plasticity, and good compatibility with the base film and provides a protective effect on the base film layer, so that the mechanical properties and heat resistance of the composite separator can be effectively improved.

In some possible embodiments, the self-healing functional layer further comprises at least one of a binder and a dispersant. In this case, the binder has good adhesive properties, enabling the thermally cyclopolymerizable precursor material within the self-healing functional layer to adhere to and connect the surface of the base film layer by means of adhesion and cohesion, thereby forming a stable film layer. The dispersant favorably ensures the uniform distribution of the thermally cyclopolymerizable precursor material within the self-healing functional layer, enhancing the uniformity and flatness of the film layer. This ensures that the precursor material can form a uniform crosslinked network structure film layer on the surface of the base film layer under subsequent high temperature or battery thermal runaway conditions, thereby improving the properties such as thermal stability, mechanical properties, and toughness of the base film layer.

In some possible embodiments, in the self-healing functional layer, the mass ratio of the precursor material to the binder to the dispersant is (70-99.9):(0.1-25):(0.1-5); At this ratio, the content of the precursor material ensures that the polymer with a crosslinked network structure formed after thermal cyclopolymerization can fully cover the surface layer of the base film, thereby effectively improving the properties such as mechanical properties, thermal stability, and toughness of the base film layer and ensuring the self-healing effect of the base film layer. The irreversible structural changes such as thermal shrinkage, deformation, and pore closure in the base film are effectively inhibited and repaired. The ratio of the binder to the dispersant fully ensures the uniformity of the self-healing functional layer on the film layer and the bonding firmness between the self-healing functional layer and the base film layer. Issues such as unstable bonding between the self-healing functional layer and the base film layer, leading to film layer separation, reduced thermal protective effect, increased cell impedance, and increased composite separator thickness, etc., are avoided, and the impact of the composite separator on the kinetic performance of the cell is reduced. By way of example, in the self-healing functional layer, the mass ratio of the precursor material to the binder to the dispersant may be (70-99.9):(0.1-20):(0.1-5), (80-99.9):(5-20):(2-4), (70-80):(10-20):(3-5), (75-90):(5-15):(1-3), (80-95):(5-20):(1-2), (85-95):(6-15):(2-4), etc.

In some possible embodiments, the binder includes at least one of shellac, butyl rubber, carboxymethyl cellulose, polyurethane, polystyrene, polyacrylate, an ethylene-vinyl acetate copolymer, a vinyl acetate resin, an acrylic resin, and chlorinated rubber. These binders all have relatively high bonding properties and enable the self-healing functional layer containing the thermally cyclopolymerizable precursor material to be stably and firmly bonded to the surface of the base film layer. Moreover, these binders can coexist with the polymer of the thermally cyclopolymerizable precursor material, are insoluble in electrolyte solutions, and have an electrochemical window covering the working voltage window of the cell. When these binders are applied to composite separators and the composite separators are applied to cells, no chemical side reactions and electrochemical side reactions occur.

In some possible embodiments, the dispersant includes at least one of an ethylene glycol-based dispersant, a polyol-based dispersant, aminooleyl oleate, a polycaprolactone polyol-polyethyleneimine block copolymer-based dispersant, an acrylate polymer-based dispersant, and a polyurethane- or polyester-based polymer dispersant. These dispersants can improve the dispersion uniformity of the thermally cyclopolymerizable precursor material in the self-healing functional layer, thereby improving the film layer uniformity, flatness and other properties of the self-healing functional layer. Moreover, these dispersants can coexist with the polymer of the thermally cyclopolymerizable precursor material, are insoluble in electrolyte solutions, and have an electrochemical window covering the working voltage window of the cell. When these binders are applied to composite separators and the composite separators are applied to cells, no chemical side reactions and electrochemical side reactions are found.

In some possible embodiments, the thickness of the self-healing functional layer is 0.01-20 µm. Under this thickness condition, the self-healing functional layer not only ensures the enhancement of the self-healing effect on the base film layer, enabling irreversible structural changes such as thermal shrinkage deformation and pore closure in the base film to be effectively reduced and repaired, but also improves the properties such as toughness, mechanical strength, and thermal properties of the composite separator, thereby enhancing the kinetic performance after the composite separator is applied to a cell. In addition, inadequate repair and healing effects of the self-healing functional layer on the base film layer due to excessive thinness, as well as problems such as affected mechanical toughness of the composite separator, increased cell impedance, reduced cell capacity, etc., caused by excessive thickness of the functional layer are avoided. By way of example, the thickness of the self-healing functional layer may be 0.01-0.1 µm, 0.1-1 µm, 1-2 µm, 2-5 µm, 5-8 µm, 8-10 µm, 10-13 µm, 13-15 µm, 15-18 µm, 18-20µm, etc.

In some possible embodiments, the thickness of the self-healing functional layer is 1-10 µm; under this thickness condition, the self-healing functional layer is more conducive to balancing the self-healing effect on the base film layer and the enhancement of the toughness, mechanical strength, and thermal properties of the composite separator, and reduces the electrode plate space occupancy of the composite separator inside the cell, thereby reducing the proportion of inactive materials inside the cell and increasing the energy density of the cell. By way of example, the thickness of the self-healing functional layer may be 1-2 µm, 2-3 µm, 3-4 µm, 4-5 µm, 5-6 µm, 6-7 µm, 7-8 µm, 8-9 µm, 9-10 µm, etc.

In some possible embodiments, the thickness of the base film layer is 0.1-100 µm. The thickness range of the base film layer encompasses the requirements for separator thickness in conventional battery systems, thereby enabling the composite separator to meet the thickness requirements of various battery systems, offering a broad range of applications. In practical applications, the thickness of the base film layer can be selected according to specific application requirements. By way of example, the thickness of the base film layer may be 0.1-1 µm, 1-10 µm, 10-20 µm, 20-30 µm, 30-40 µm, 40-50 µm, 50-60 µm, 60-70 µm, 70-80 µm, 80-90 µm, 90-100 µm, etc.

In some possible embodiments, the thickness of the base film layer is 5-20 µm. Under this condition, the thickness of the base film layer can not only effectively ensure the migration and transport efficiency of ions in the positive and negative electrode plates of the cell, but also facilitate the lightweight design of the cell, thereby improving the energy density of the cell. By way of example, the thickness of the base film layer may be 5-7 µm, 7-10 µm, 10-12 µm, 12-15 µm, 15-18 µm, 18-20 µm, etc.

In some possible implementations, the base film layer comprises at least one material selected from polypropylene (PP), polyethylene (PE), glass fibers, polyvinylidene fluoride, polyimide films, glass fiber films, cellulose films, and polyvinylidene fluoride-hexafluoropropylene films (PVDF+HFP). The materials of these base film layers have good electrical insulation property and maintain chemical stability over a wide range of temperature and voltage. It is also conducive to making a base film layer with a small thickness, high uniformity, appropriate porosity and pore size, which can quickly be wetted by the electrolyte, isolate electrons while maintaining the free flow of ions, so as to meet the requirements of high energy, high power and cycling performance of the battery. At the same time, it also has certain mechanical strength and processing strength to meet the needs of battery during assembly and use.

In some possible embodiments, in the composite separator, the mass ratio of the self-healing functional layer to the base film layer is (0.1-1):1. This mass ratio can not only ensures that the self-healing functional layer effectively reduces and repairs irreversible structural changes such as thermal shrinkage deformation and pore closure in the base film, thereby ensuring the self-healing effect thereof on the base film layer and improving the properties such as toughness, mechanical strength, and thermal properties of the base film layer, but can also improve the kinetic performance and increase the energy density of a cell after the composite separator is applied to the cell. By way of example, the mass ratio of the self-healing functional layer to the base film layer may be (0.1-0.3):1, (0.3-0.5):1, (0.5-0.8):1, (0.8-1.0):1, etc.

In some possible embodiments, the thermal shrinkage rate of the composite separator is reduced by 15-55% relative to the base film layer. The composite separator in the embodiment of the present application comprises a self-healing functional layer. Under high temperature or battery thermal runaway conditions, the precursor material in this functional layer undergoes a thermal cyclopolymerization reaction to form a crosslinked network structure in situ on the surface of the base film layer, offering a self-healing effect on the structural changes of the base film layer and improving the thermal stability of the base film layer. Thereby, the composite separator has excellent thermal properties and can significantly reduce the thermal shrinkage rate of the composite separator. Compared with a base film layer without the self-healing functional layer, the thermal shrinkage rate of the composite separator comprising the base film layer and the self-healing functional layer can be reduced by 15-55%. By way of example, compared with the base film layer, the thermal shrinkage rate of the composite separator can be reduced by 15-20%, 20-25%, 25-30%, 30-35%, 35-40%, 40-45%, 45-50%, etc.

In some possible embodiments, the porosity of the composite separator is 30-70%. By way of example, the porosity of the composite separator may be 30-40%, 40-50%, 50-60%, 60-70%, etc.

In some possible embodiments, the gas permeability of the composite separator is 100-250 s/100 mL. By way of example, the gas permeability may be 100-120 s/100 mL, 120-150 s/100 mL, 150-180 s/100 mL, 180-200 s/100 mL, 200-230 s/100 mL, 230-250 s/100 mL, etc.

Before the self-healing functional layer arranged in the composite separator in the embodiments of the present application undergoes thermal cyclization, the thermally cyclopolymerizable precursor material exists independently, and after thermal cyclization, the thermally cyclopolymerizable precursor material forms a crosslinked network structure upon heating. In both cases, parameters such as porosity and gas permeability of the composite separator will not be affected, and the kinetic characteristics of the separator will not be affected.

The composite separator of the above embodiment of the present application can be prepared by the following embodiment method.

As shown in FIG. 8, in a second aspect, an embodiment of the present application provides a method for preparing a composite separator, comprising the following steps:
S10. preparing a self-healing slurry, wherein the self-healing slurry comprises a thermally cyclopolymerizable precursor material; and
S20. obtaining at least one base film and applying the self-healing slurry to a surface of the base film to form a self-healing functional layer, thereby obtaining a composite separator; and after the self-healing functional layer has self-healed, the precursor material forms a crosslinked polymer structure.

In the method for preparing a composite separator, as provided in the embodiment of the present application, after a self-healing slurry comprising a thermally cyclopolymerizable precursor material is prepared, the self-healing slurry is applied to a surface of a base film to form a self-healing functional layer, thus obtaining the composite separator. The preparation process is simple, has mild conditions, and is suitable for large-scale industrial production and application. The self-healing functional layer in the prepared composite separator has excellent self-healing effects. Under high temperature or cell thermal runaway conditions, the precursor material undergoes thermal cyclopolymerization to form a crosslinked polymer structure in situ on the surface of the base film layer. The crosslinked polymer structure plays an effective supporting role for the base film layer and prevents the base film layer from structural changes such as thermal shrinkage, deformation and pore closure under high temperature or cell thermal runaway conditions and repair these structural changes. By maintaining the pore structure of the separator unchanged, the current and heat generation in the cell can be maintained within normal ranges, so as to avoid further contact between the positive and negative electrodes to form a short circuit due to damage and changes in the separator, thus preventing the short-circuit current from increasing and preventing further deterioration of thermal runaway. It improves the properties such as toughness, mechanical strength, and thermal stability of the composite separator, and provides an excellent thermal protective effect on both the composite separator and the cell system in which it is applied.

In the above step S10, a self-healing slurry containing a thermally cyclopolymerizable precursor material is prepared. The a thermally cyclopolymerizable precursor material in the slurry undergoes thermal cyclopolymerization under high temperature or cell thermal runaway conditions to form a crosslinked polymer structure in situ on the surface of the base film layer, thereby endowing the composite separator with self-healing functionality.

In some possible embodiments, the step of preparing the self-healing slurry comprises: after the precursor material is prepared, mixing the precursor material with a binder, a dispersant, and a solvent to form the self-healing slurry. In this case, the binder has good adhesive properties, enabling the thermally cyclopolymerizable precursor material within the self-healing functional layer to adhere to and connect the surface of the base film layer by means of adhesion and cohesion, thereby forming a stable film layer. The dispersant favorably ensures the uniform distribution of the thermally cyclopolymerizable precursor material within the self-healing functional layer, thereby improving the uniformity and flatness of the film layer. The solvent facilitates thorough dispersion and dissolution of each of the components to form a stable slurry system, which is conducive to the subsequent formation of the self-healing functional film layer.

In some possible embodiments, in the self-healing slurry, the mass ratio of the precursor material to the binder to the dispersant is (70-99.9):(0.1-25):(0.1-5); At this ratio, the content of the precursor material ensures that the polymer with a crosslinked network structure formed after thermal cyclopolymerization can fully cover the surface layer of the base film, thereby effectively improving the properties such as mechanical properties, thermal stability, and toughness of the base film layer and ensuring the self-healing effect of the base film layer.

In some possible embodiments, the solid content in the self-healing slurry is 30-80%. By way of example, the solid content in the self-healing slurry may be 30-40%, 40-50%, 50-60%, 60-70%, 70-80%, 80-90%, etc. This solid content not only ensures the uniform and stable dissolution and dispersion of the components such as the precursor material, the binder, and the dispersant, but also facilitates the formation of a self-healing functional layer on the surface of the base film from the self-healing slurry.

In some possible embodiments, the precursor material includes at least one of an aryl ether, an arylalkene compound, and an arylsilane monomer. These precursor materials can all undergo thermal cyclopolymerization under high temperature or cell thermal runaway conditions to form a crosslinked polymer network structure, which has a protective effect on the base film. Moreover, these precursor materials all contain aryl structures. Aromatic rings in the crosslinked polymer layer formed after thermal cyclopolymerization can increase the mechanical properties and thermal stability of the polymer, so that the polymer layer containing the aromatic rings has excellent mechanical strength and thermal stability and other properties. In addition, the precursor material also contains functional groups such as ether bonds and silane bonds, which can increase the flexibility of the crosslinked polymer after thermal cyclopolymerization, thereby improving the flexibility and toughness of the composite separator. After being applied to a cell, it is helpful for the composite separator to cope with the volume expansion/deformation of electrodes during the charging and discharging process.

In some possible embodiments, the aryl ether includes at least one of a diarylmethane sulfide compound, an aryl disulfide, and a fluorine-containing aryl vinyl ether compound. These aryl ether precursor materials can all undergo a thermal cyclopolymerization reaction under high temperature or cell thermal runaway conditions. On the one hand, the formed crosslinked polymer network structure contains aryl ring groups, which can increase the mechanical properties and thermal stability of the polymer. On the other hand, the ether bond contained therein can increase the flexibility of the molecular chain of the polymer, thereby ensuring the flexibility and toughness of the polymer after being composited with the base film and ensuring the toughness of the composite separator. It addition, it also contains elements such as fluorine, which can improve the solvent resistance and oil resistance of the polymer, thereby reducing the swelling rate of the composite separator and improving the liquid absorption effect thereof.

In some possible embodiments, the preparation of the arylalkene compound comprises the steps of: subjecting a halogenated aryl non-conjugated alkene compound to a lithium-halogen displacement reaction with an organolithium reagent to obtain an arylalkenyl lithium; and subjecting the arylalkenyl lithium to an electrophilic addition reaction with an electrophile to obtain the arylalkene compound. In this case, a halogenated aryl non-conjugated diene compound is used for a lithium-halogen displacement reaction with an organolithium reagent, yielding organolithium radical cations and halogenated alkene anions, respectively. The elimination of lithium ions and halide ions results in the formation of two carbon radical intermediates, which ultimately undergo disproportionation and recombination to obtain a new arylalkenyl lithium reagent. The selectivity of the lithium-halogen exchange reaction is governed by the stability of the resulting carbanions. Since the carbanions of the organolithium reagent is stable, it exhibits high reactivity, allowing lithium to replace the position of the halogen element. The arylalkenyl lithium generated by the lithium-halogen exchange reaction has nucleophile characteristics and a relatively strong electron-donating capability, and can spontaneously react with an electrophile (which has a strong electron-withdrawing capability), leading to atom transfer, radical recombination, and addition-cleavage of unsaturated bonds. Therefore, an electrophile is used to attack the unsaturated bond of the arylalkenyl lithium, inducing an electrophilic addition reaction, resulting in the molecular weight of the monomer increasing and the molecular chain elongating, thus yielding an arylalkenyl compound macromonomer-based thermally polymerizable precursor material with a stable performance at room temperature.

In some possible embodiments, the molar mass ratio of the halogenated aryl non-conjugated alkene compound to the organolithium reagent to the electrophile is (0.4-0.8):(0.1-0.4):(0.1-0.2). This ratio fully ensures the lithium-halogen exchange reaction between the halogenated aryl non-conjugated alkene compound and the organolithium reagent and the electrophilic addition reaction between the arylalkenyl lithium and the electrophile.

In some possible embodiments, the halogenated aryl non-conjugated alkene compound comprises at least one of bromo-trifluorovinyloxybenzene, trifluorovinyl aryl ether, and perfluorocyclobutyl aryl ether. These are all compounds containing non-conjugated dienes, capable of undergoing lithium-halogen displacement reactions with organolithium reagents. Since the carbanion in the organolithium reagent is stable, it has a strong reactivity, and lithium can replace the position of the halogen element, eliminating lithium ions and halide ions to form two carbon radical intermediates, which ultimately undergo disproportionation and recombination to yield a new arylalkenyl lithium reagent.

In some possible embodiments, the organolithium reagent includes at least one of butyllithium, lithium hexamethyldisilazide, phenyllithium, n-hexyllithium, lithium diisopropylamide, and n-butyllithium. These organolithium reagents have stable carbanions and strong activity, and lithium can replace the position of the halogen element in the halogenated aryl non-conjugated alkene compound. The resulting lithium compound has a relatively strong nucleophilic effect, providing conditions for subsequent thermal cyclopolymerization.

In some possible embodiments, the electrophile comprises at least one of hydrogen halide, halohydrocarbon, acyl halide, a carbonyl compound, boron hydride, diisobutylaluminum hydride, diisopropyl fluorophosphate, isopropyl methylfluorophosphate, and iodoacetic acid. These electrophiles have a strong electron-withdrawing capability, and the arylalkenyl lithium generated after lithium-halogen exchange has nucleophile characteristics and a relatively strong electron-donating capability and can thus spontaneously react with these electrophiles, leading to atom transfer, radical recombination, addition-cleavage of unsaturated bonds, resulting in the molecular chain elongating, thereby yielding an arylalkenyl compound macromonomer-based thermally polymerizable precursor material.

In some possible embodiments, the reaction temperature for preparing the arylalkene compound may be 75-450°C. During actual preparation processes, appropriate reaction temperature conditions can be set based on the physicochemical properties of the raw material components.

In some possible embodiments, the preparation of the arylsilane monomer comprises the step of subjecting a silicate compound to a condensation reaction with a halogenated alkenyl ether compound in the presence of a catalyst to obtain the arylsilane monomer. In this case, the silicate compound undergoes a condensation reaction with the halogenated alkenyl ether compound under the action of a catalyst to form a functional arylsilane monomer. This monomer can form a bridged polyarylsiloxane crosslinked network structure under heating conditions, endowing the composite separator with self-healing and repair functionalities, thus improving the properties such as toughness, mechanical strength, and thermal stability of the composite separator.

In some possible embodiments, the ratio of the total mass of the silicate compound and the halogenated alkenyl ether compound to the mass of the catalyst is 1:(0.01-0.5). Under the dosage condition of the catalyst, the reaction free energy can be effectively reduced, thereby fully ensuring the condensation reaction between the silicate compound and the halogenated alkenyl ether compound. By way of example, the ratio of the total mass of the silicate compound and the halogenated alkenyl ether compound to the mass of the catalyst may be 1:(0.01-0.05), 1:(0.05-0.1), 1:(0.1-0.2), 1:(0.2-0.3), 1:(0.3-0.4), 1:(0.4-0.5), etc.

In some possible embodiments, the molar ratio of the silicate compound to the halogenated alkenyl ether compound may be (1-1.2):(1-1.2). By way of example, it may be 1:1, 1:1.1, 1:1.2, 1.2:1, 1.1:1, etc., ensuring complete reaction of the reactants, or it may be any other ratio that can promote the efficiency of the condensation reaction.

In some possible embodiments, the silicate compound comprises at least one of tetraethoxysilane, vinyltrimethoxysilane, triethoxysilane, methyl ether dimethylsilane, and triisopropylsilane.

In some possible embodiments, the halogenated alkenyl ether compound comprises at least one of trifluorovinyl aryl ether, diphenyl vinyl ether, brominated diphenylethylene ether, perfluoromethyl isopropyl ether, perfluoroisobutyl vinyl ether, hexafluoroisopropenyl methyl ether.

In some possible embodiments, the catalyst is selected from metallocene catalysts, and specifically, the catalyst includes at least one of an organoboron compound (B(C6F5)3) and an alkylaluminoxane (MAO).

Under the action of a metallocene catalyst, the silicate compounds and halogenated alkenyl ether compounds used in the above embodiments of the present application effectively reduce the free energy of a reaction and can both undergo a condensation reaction to obtain a new functional arylsilane monomer, i.e., an organosiloxane macromonomer. It has high-temperature thermal polymerization characteristics, a mass-average molecular weight that can reach 10000 or more, a high degree of polymerization, high mechanical strength and plasticity, good heat resistance, and excellent compatibility with the base film.

In some possible embodiments, the binder includes at least one of shellac, butyl rubber, carboxymethyl cellulose, polyurethane, polystyrene, polyacrylate, an ethylene-vinyl acetate copolymer, a vinyl acetate resin, an acrylic resin, and chlorinated rubber. These binders all have relatively high bonding properties and enable the self-healing functional layer containing the thermally cyclopolymerizable precursor material to be stably and firmly bonded to the surface of the base film layer. Moreover, these binders can coexist with the polymer of the thermally cyclopolymerizable precursor material, are insoluble in electrolyte solutions, and have an electrochemical window covering the working voltage window of the cell. When these binders are applied to composite separators and the composite separators are applied to cells, no chemical side reactions and electrochemical side reactions occur.

In some possible embodiments, the dispersant includes at least one of an ethylene glycol-based dispersant, a polyol-based dispersant, aminooleyl oleate, a polycaprolactone polyol-polyethyleneimine block copolymer-based dispersant, an acrylate polymer-based dispersant, and a polyurethane- or polyester-based polymer dispersant. These dispersants can improve the dispersion uniformity of the thermally cyclopolymerizable precursor material in the self-healing functional layer, thereby improving the film layer uniformity, flatness and other properties of the self-healing functional layer. Moreover, these dispersants can coexist with the polymer of the thermally cyclopolymerizable precursor material, are insoluble in electrolyte solutions, and have an electrochemical window covering the working voltage window of the cell. When these binders are applied to composite separators and the composite separators are applied to cells, no chemical side reactions and electrochemical side reactions are found.

In some possible embodiments, the solvent includes at least one of water, methanol, ethanol, NMP, acetone, tetrachloroethylene, dichloroethane, trichloroethane, anisole, propanol, butyl acetate, and tetrahydrofuran. These solvents not only all have relatively high dissolution effects on the components such as the precursor material, the dispersant, and the binder, but also favorably improves the stabilization of the self-healing slurry due to their small molecular sizes and stable chemical properties.

**In** the above step S20, after at least one base film is obtained, the method for forming a self-healing functional layer on the surface of the base film from the self-healing slurry includes, but is not limited to, applying the self-healing slurry to the surface of the base film by means of coating, spraying, etc., to form a wet slurry film, followed by a drying treatment to allow the solvent to evaporate and the film layer to cure, thereby forming a tightly and stably bonded self-healing functional layer on the surface of the base film, thus resulting in the composite separator. When the composite separator is applied to a cell, the composite separator functions to isolate a positive electrode plate from a negative electrode plate and conduct lithium ions while blocking electrons. The thermally cyclopolymerizable precursor material in the self-healing functional layer on the surface of the base film layer is electrochemically stable and does not affect the electrochemical performance of the cell. When overheating or thermal runaway occurs inside the cell, the thermally cyclopolymerizable precursor material in the self-healing functional layer undergoes a thermal polymerization reaction to generate a crosslinked polymer structure. The crosslinked polymer structure plays an effective supporting role for the base film layer and effectively prevents the base film layer from structural changes such as thermal shrinkage, deformation and pore closure under high temperature or cell thermal runaway conditions and repair these structural changes. Thus, the composite separator has a self-healing function and results in a protective effect on the separator. By maintaining the pore structure of the separator unchanged, the current and heat generation in the cell can be maintained within normal ranges, so as to avoid further contact between the positive and negative electrodes to form a short circuit due to damage and changes in the separator, thus preventing the short-circuit current from increasing and preventing further deterioration of thermal runaway.

In a third aspect, an embodiment of the present application provides a secondary battery, comprising a positive electrode, a negative electrode, a separator, and an electrolyte solution, wherein the separator comprises the above composite separator or the composite separator prepared by the above method.

In the secondary battery of the embodiment of the present application, since the separator comprises the above composite separator and the surface of the base film layer of the composite separator is provided with a self-healing functional layer, the composite separator functions to isolate the positive electrode plate from the negative electrode plate and conduct lithium ions while blocking electrons when the secondary battery is under normal working conditions. When overheating or thermal runaway occurs inside the secondary, the thermally cyclopolymerizable precursor material in the self-healing functional layer undergoes a thermal polymerization reaction to generate a high-temperature-resistant and high-mechanical-strength crosslinked polymer, and the crosslinked polymer has a supporting effect on the separator and can also inhibit irreversible deformations such as thermal pore closure and thermal shrinkage of a base film; in addition, the spatial structure of the crosslinked polymer also has a repairing effect on damage to a local pore structure of the base film. Therefore, it can effectively prevent further deterioration of thermal runaway in the secondary battery, provides a good thermal protective effect on the secondary battery system, and significantly improves the safety performance and electrochemical performance of the secondary battery.

The present application does not specifically limit the positive electrode, negative electrode, electrolyte solution, etc. in the secondary battery of the embodiments and is applicable to any battery system.

In some possible implementations, the negative electrode material in the secondary battery includes, but is not limited to, carbonaceous materials such as graphite, soft carbon (e.g., coke), and hard carbon, or materials such as nitrides, tin-based oxides, tin alloys, and silicon-based negative electrodes.

In some possible implementations, the preparation of the negative electrode plate includes the following steps: mixing a negative electrode material with a conductive agent such as conductive carbon black, a binder such as carboxymethyl cellulose and styrene butadiene rubber, and a solvent such as water in a mass ratio of (80-99):(1-5):(2-10):100 to form a positive electrode mixed slurry, followed by vacuum degassing, material discharging, coating on a coating machine, and rolling, slitting, and die-cutting to obtaining a negative electrode plate.

In some possible implementations, the positive electrode material in the secondary battery includes metal oxides, such as lithium cobalt oxide, lithium nickel oxide, ternary nickel-cobalt-manganese material, lithium nickel cobalt aluminum oxide, lithium-rich manganese-based material, lithium manganate, lithium nickel manganese oxide, ferrosoferric oxide, lithium vanadium oxide, etc., polyanionic salts such as phosphates, silicates, sulfates, borates, titanates, such as lithium iron phosphate, lithium manganese phosphate, lithium iron manganese phosphate, lithium vanadium phosphate, lithium vanadium phosphate, lithium cobalt phosphate, lithium nickel phosphate, lithium iron silicate, lithium ferrous fluorosulfate, lithium iron borate, lithium iron titanate, etc., as well as fluorides, sulfides, selenides and other types, such as iron trifluoride, cobalt trifluoride, nickel trifluoride (NiF3), titanium disulfide, iron disulfide, molybdenum disulfide, niobium triselenide, etc.

In some possible implementations, the preparation of the positive electrode plate includes the following steps: mixing a positive electrode material with a conductive agent such as conductive carbon black, a binder such as polyvinylidene fluoride, and a solvent such as N-methyl pyrrolidone in a mass ratio of (80-99):(1-5):(2-10):100 to form a positive electrode mixed slurry, followed by vacuum degassing, material discharging, coating on a coating machine, and rolling, slitting, and die-cutting to obtain a positive electrode plate.

In some possible implementations, the electrolyte solution in the secondary battery includes at least one soluble metal salt.

In some possible embodiments, the secondary battery includes at least one of a battery cell, a battery module, and a battery pack.

In some possible implementations, the battery cell types include lithium-ion batteries, and new batteries such as sodium-ion batteries, lithium-air batteries, and lithium metal batteries.

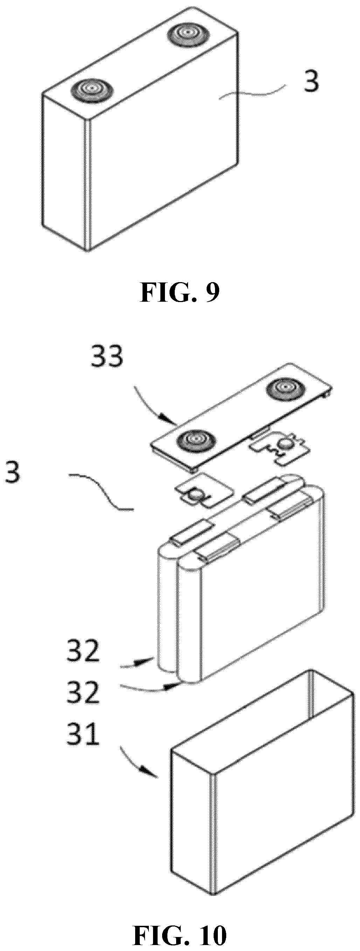

In some possible implementations, the embodiments of the present application have no special limitation on the shape of the battery cell, and the shape of the battery cell can be of a cylindrical, square or any other shape. For example, FIG. 9 is a battery cell 3 with a square structure as an example.

In some embodiments, as shown in FIG. 10, an outer package of the battery cell 3 may include a case 31 and a cover plate 33. The case 31 may include a bottom plate and side plates connected to the bottom plate, which enclose to form an accommodating cavity. The case 31 has an opening in communication with the accommodating cavity, and the cover plate 33 is used for covering the opening to close the accommodating cavity. The positive electrode plate, the negative electrode plate, and the separator may form an electrode assembly 32 by a winding process and/or a stacking process. The electrode assembly 32 is encapsulated in the accommodating cavity. The electrolyte solution infiltrates the electrode assembly 32. The number of electrode assemblies 32 contained in the battery cell 3 can be one or more and can be adjusted according to requirements. In such a case, the composite separator of the above embodiment is arranged between the positive electrode plate and the negative electrode plate.

In some possible implementations, the battery cells according to the present application can be assembled into a battery module, the number of battery cells included in the battery module can be more, and the specific number can be adjusted according to the application and capacity of the battery module.

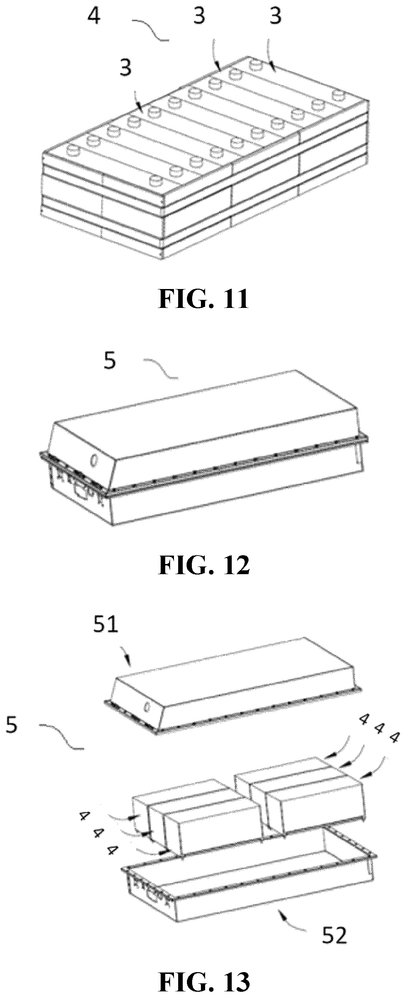

In a possible embodiment, a schematic diagram of a battery module 4 as an example is as shown in FIG. 11, in which a plurality of battery cells 3 in the battery module 4 may be arranged sequentially along the length direction of the battery module 4. Of course, they can also be arranged in any other way. Furthermore, the plurality of battery cells 3 may be fixed by fasteners.

In a possible embodiment, the battery module 4 may further include a shell having an accommodating space, and the plurality of battery cells 3 are accommodated in the accommodating space.

In a possible embodiment, the above battery cells and/or battery modules can also be assembled into a battery pack, and the number of battery cells or battery modules contained in the battery pack can be adjusted according to the application and capacity of the battery pack.

In a possible embodiment, a schematic diagram of a battery pack 5 as an example is as shown in FIGs. 12 and 13, in which the battery pack 5 may comprise a battery box and a plurality of battery modules 4 arranged in the battery box. The battery box comprises an upper box 51 and a lower box 52, wherein the upper box 51 is used to cover the lower box 52 to form an enclosed space for accommodating the battery modules 4. The plurality of battery modules 4 can be arranged in the battery box in an arbitrary manner.

In a fourth aspect, an embodiment of the present application further provides an electrical device, comprising the above secondary battery.

Since the electrical device of the embodiment of the present application comprises the secondary battery with high safety performance and excellent electrochemical performance, the electrical safety and stability of the electrical device are improved during power utilization.

In a possible embodiment, for the electrical device, the above battery cell, the battery module, or the battery pack can be selected according to the use requirements of the electrical device.

In a possible embodiment, the electrical device may be, but is not limited to, a mobile device (such as a mobile phone and a laptop), or an electric vehicle (such as an all-electric vehicle, a hybrid electric vehicle, a plug-in hybrid electric vehicle, an electric bicycle, an electric scooter, an electric golf cart, and an electric truck), or an electric train, a ship, a satellite, an energy storage system, etc.

In a possible embodiment, the electrical device may be an all-electric vehicle, a hybrid electric vehicle, a plug-in hybrid electric vehicle, etc. In order to satisfy the requirements of the electrical device for high power and high energy density of the battery, the above battery pack or battery module can be used.

In some specific embodiments, a schematic view of an electrical apparatus as an example is shown in FIG. 11. The electrical apparatus is, e.g., an all-electric vehicle, a hybrid electric vehicle, or a plug-in hybrid electric vehicle. In order to meet the requirements of the electrical apparatus for high power and high energy density, a battery pack or a battery module may be used.

In some other possible embodiments, the electrical device may also be a tape recorder, a radio, an electronic learning machine, a mobile phone, a tablet, a laptop, etc. Lighting and thinning of the electrical device is generally required, and thus the battery cell in the above embodiment can be used as a power source.

### Examples

Examples of the present application will be described below. The examples described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### Example 1

This example of the present application provided a composite separator, and the steps of the preparation method therefor were as follows:
1. Tetraethoxysilane and trifluorovinyl aryl ether were taken as samples at a molar ratio of 1:1, placed in a clean container, and maintained at a constant temperature of 80°C, a catalyst (B(C₆F₃)₃) was then added, maintained at a stirring speed of 100 r/min, and reacted for 2 h to prepare a trifluorovinyl aryl ether-based organosiloxane macromonomer.
2. The trifluorovinyl aryl ether-based organosiloxane macromonomer was mixed with polyacrylate and ethylene glycol in a mass ratio of 9:0.6:0.4 until uniform, 45% by volume of N-methyl pyrrolidone solvent (NMP) was added, and the mixture was stirred at 600 r/min for 30 min to prepare a self-healing slurry.
3. The self-healing slurry was applied to a surface of a single-layer 7 µm PE base film to reach a thickness of 3 µm, thereby preparing a composite separator with self-healing functionality.

### Example 2

This example provided a composite separator, and the steps of the preparation method therefor were as follows:
1. Trifluorovinyl aryl ether, styrene butadiene rubber, and polyacrylamide were mixed in a mass ratio of 8.5:1:0.5 until uniform, 40% by volume of the solvent NMP was added, and the mixture was stirred at 500 r/min for 3 h to prepare a self-healing slurry.
2. The self-healing slurry was applied to a surface of a 9 µm PP base film, with the thickness controlled to be 5 µm, thereby preparing a composite separator with self-healing functionality.

### Example 3

This example provided a composite separator, and the steps of the preparation method therefor were as follows:
1. p-Bromo-trifluorovinyloxybenzene was fully reacted with butyllithium at a molar ratio of 1:1 to obtain an organolithium compound, and the organolithium compound was reacted with the electrophile iodoacetic acid at a molar ratio of 1:1.05 to prepare the fluorinated vinyl aryl ether, wherein complete reaction of the organolithium compound was ensured.
2. The fluorinated vinyl aryl ether was mixed with polyvinylidene fluoride (PVDF) and glyceryl monostearate in a mass ratio of 8.8:0.8:0.4 until uniform, 45% by volume of the solvent NMP was added, and the mixture was stirred at 600 r/min for 30 min to prepare a self-healing slurry.
3. The self-healing slurry was applied to a surface of a 20 µm PP/PE composite base film by spraying, with the thickness controlled to be 8 µm, thereby preparing the composite separator with self-healing functionality, wherein the PP/PE film has a thickness ratio of 1:1.

The properties such as gas permeability, porosity, and thermal shrinkage rate of each of the above examples and the base film layer used in each of the examples were tested after heat treatment at a high temperature.
1. Gas permeability test method: Where the composite separator was fixed, a certain gas pressure was applied to one side of the composite separator. Due to the presence of micropores in the separator, the gas pressure gradually decreased until equal to the atmospheric pressure. The time taken for the pressure to decrease from the initial pressure to the final pressure by comparison was defined as the gas permeability of the separator.
2. Porosity test method:
   (1). A composite separator was stacked into 6 layers, flattened, and tightly compressed to remove air from the composite separator. The stacked composite separator was cut into a sample according to a cutting template, and the cut sample was measured to obtain the area S of the sample.
   (2). The thickness of the sample was measured, the number of measurements was 10 or 20, and the average value was calculated as B.
   (3). The weight of the composite separator was measured using an electronic balance, and the number of measurements was 3 to obtain the average value M.
   (4). Calculation was carried out by the formula: Porosity p = [(Density of the composite separator raw material * S * B - M) / (Density of the separator raw material * S * B)] * 100%.
3. Thermal shrinkage rate test method:
   (1). The composite separator was stacked into 3 layers, flattened, the air between films was expelled, a cutting template (300 * 100) was taken to cut out a composite separator sample, and the length A1 and width B1 of the cut sample was measured.
   (2). The oven temperature was set to 90°C, and the temperature was maintained for 1 hour once it was reached. The sample was placed in an oven and maintained at the temperature for 2 h. Timing was performed with a stopwatch or directly with a timer built in the oven.
   (3). After 2 h, the composite separator was taken out and cooled for 10 min, and the length A2 and width B2 of the sample were then measured.
   (4). The longitudinal thermal shrinkage of the composite separator was (MD) = (A1 - A2) / A1 * 100%, and the transverse thermal shrinkage of the separator was (TD) = (B1 - B2) / B1 * 100%.

The test results are as shown in Tables 1-3 below.

**Table 1 Performance test results of composite separator of Example 1 and comparative base film layer**

| Heat treatment conditions: maintained at 120-180°C for 30 min | | |
|---|---|---|
| | Comparative Example (PE base film layer only) | Example 1 (PE + self-healing functional layer) |
| Gas permeability (S/100 mL) | 260 S/100 mL | 180 S/100 mL |
| Porosity (%) | 65% | 40% |
| Thermal shrinkage (%) | Transverse 30%; and longitudinal 60% | Transverse 15%; and longitudinal 30% |

As can be seen from the test results in Table 1 above, in Example 1 of the present application, tetraethoxysilane (TEOS) and an organosilane containing a trifluorovinyl aryl ether (TFVE) unit underwent a condensation reaction under the action of catalysis of B(C₆F₅)₃ to efficiently prepare a new TFVE-functionalized trifluorovinyl aryl ether-based organosiloxane macromonomer. After the macromonomer was formed into a self-healing functional layer on a surface of the base film layer, the composite separator could form a hexafluorocyclobutyl aryl ether (PFCB)-bridged polyarylsiloxane crosslinked network structure under heating conditions. The material had excellent thermal and insulating properties and significantly reduced the thermal shrinkage rate of the composite separator. The transverse tensile strength was reduced to 15%, and the longitudinal tensile strength was reduced to 30%. In addition, the gas permeability of the composite separator was improved. Furthermore, under the premise of ensuring the gas permeability and thermal shrinkage performance of the separator, the porosity of the composite separator was more conducive to avoiding contact between the positive and negative electrodes, reducing leakage current, and thus improving the safety performance of the battery.

**Table 2 Performance test results of composite separator of Example 2 and comparative base film layer**

| Heat treatment conditions: maintained at 130-180°C for 30 min | | |
|---|---|---|
| | Comparative Example (PP base film layer only) | Example 2 (PP + self-healing functional layer) |
| Gas permeability (S/100 mL) | 400 S/100 mL | 300 S/100 mL |
| Porosity (%) | 70% | 40% |
| Thermal shrinkage (%) | Transverse 25%; and longitudinal 60% | Transverse 18%; and longitudinal 28% |

As can be seen from the test results in Table 2 above, the trifluorovinyl aryl ether in the self-healing functional layer of Example 2 of the present application had the solvent resistance and oil resistance characteristics common to fluorine-containing polymers. The polymer containing aromatic rings had excellent mechanical strength, thermal stability, flexibility and toughness, significantly improved the heat resistance of the composite separator, and reduced the thermal shrinkage rate of the composite separator. The transverse tensile strength was reduced to 18%, and the longitudinal tensile strength was reduced to 28%. In addition, the gas permeability of the composite separator was improved. Furthermore, under the premise of ensuring the gas permeability and thermal shrinkage performance of the separator, the porosity of the composite separator was more conducive to avoiding contact between the positive and negative electrodes, reducing leakage current, and thus improving the safety performance of the battery.

**Table 3 Performance test results of composite separator of Example 3 and comparative base film layer**

| Heat treatment conditions: maintained at 150-200°C for 30 min | | |
|---|---|---|
| | Comparative Example (PP/PE base film layer) | Example 3 (PP/PE + self-healing functional layer) |
| Gas permeability (S/100 mL) | 230 S/100 mL | 160 S/100 mL |
| Porosity (%) | 60% | 30% |
| Thermal shrinkage (%) | Transverse 28%; and longitudinal 55% | Transverse 20%; and longitudinal 30% |

As can be seen from the test results in Table 3 above, in Example 3 of the present application, bromo-trifluorovinyloxybenzene underwent a lithium-halogen displacement reaction with butyllithium to obtain a new arylalkenyl lithium. The electrophile iodoacetic acid attacked the unsaturated bond of the arylalkenyl lithium, inducing an electrophilic addition reaction, resulting in the molecular weight of the monomer increasing and the molecular chain elongating, thus yielding a fluorinated vinyl aryl ether-based thermally polymerizable precursor material with a stable performance at room temperature. After the self-healing functional layer was formed on the surface of the base film layer, the composite separator underwent further polymerization of the precursor material under heating conditions, resulting in the formation of a crosslinked spatial network structure. The crosslinked spatial network structure played a role of structural support to the base film, preventing thermal shrinkage and pore structure changes in the base film, thereby improving the heat resistance of the composite separator, and reduces the thermal shrinkage rate of the composite separator. The transverse tensile strength was reduced to 20%, and the longitudinal tensile strength was reduced to 30%. In addition, the gas permeability of the composite separator was improved. Furthermore, under the premise of ensuring the gas permeability and thermal shrinkage performance of the separator, the porosity of the composite separator was more conducive to avoiding contact between the positive and negative electrodes, reducing leakage current, and thus improving the safety performance of the battery.

In addition, the steps of the assembly of the composite separator of each of the examples and the corresponding pure base film layer into a cells were as follows:
1. Positive electrode plate: The positive electrode material NCM811, the binder PVDF, and the conductive agent Super-p in a mass ratio of 95:3:2 were added to the solvent NMP (N-methyl pyrrolidone) based on a solid content of 60%, the mixture was stirred in a dual planetary stirrer for 3 h and degassed in a vacuum for 30 min, and the resulting material was then discharged and applied using a coating machine, followed by rolling, slitting, and die cutting to obtain the positive electrode plate.
2. Negative electrode plate: Graphite, styrene butadiene rubber (SBR)/carboxymethyl cellulose (CMC), and carbon black in a mass ratio of 96:2:2 were added to water based on a solid content of 40%, the mixture was stirred in a dual planetary stirrer for 3 h and degassed in a vacuum for 30 min, and the resulting material was then discharged and applied using a coating machine, followed by rolling, slitting, and die cutting to obtain the negative electrode plate.
3. Electrolyte solution: Ethylene carbonate (EC) and ethyl methyl carbonate (EMC) at a volume ratio of 3:7 + 1M lithium hexafluorophosphate.
4. Cell assembly: The composite separator prepared in each of the examples and the corresponding pure base film layer were wound along with the positive electrode plate and negative electrode plate according to a conventional process to form an electrode core, the electrode core was assembled into a case, welded, sealed, and baked, followed by filling with the electrolyte solution for soaking, formation, and capacity grading to obtain the cell. The designed capacity of the cell was 60 Ah, with the electrolyte solution injection amount was 2.5 g/Ah.

The parameters such as temperature variation, leakage current, and voltage drop after thermal runaway were tested for the cells in which the composite separators of the examples were used.
1. Temperature variation testing method: A temperature sensor was located on the outer side of the cell. When thermal runaway occurred in the cell, the temperature variation of the case of the cell was monitored in real time, and the temperature of a large surface of the cell was used to equivalently characterize the internal temperature variation of the cell.
2. Leakage current testing method: The cell was connected to a shunt circuit as a current source. When short circuit occurred in the cell, a large change in current caused a change in the reading of a voltmeter in the current circuit. The magnitude of the current could be calculated according to Ohm's Law.
3. Voltage drop testing method: The open-circuit voltage V1 before thermal runaway and the open-circuit voltage V2 after thermal runaway were monitored. The voltage drop upon thermal runaway was δV = V1 - V2.

The test results are as shown in Table 4 below.

**Table 4**

| Test object | Example 1 | | Example 2 | | Example 3 | |
|---|---|---|---|---|---|---|
| Test item | PE base film | Composite separator | PP base film | Composite separator | PP/PE base film | Composite separator |
| Temperature variation (°C) | 470 | 140 | 380 | 120 | 250 | 120 |
| Leakage current (mA) | 12000 | 200 | 8000 | 300 | 6000 | 200 |
| Voltage drop (mV) | 1500 | 200 | 1200 | 300 | 900 | 150 |

As can be seen from the above test structure, as the thermally cyclopolymerizable precursor material in the self-healing separator underwent polymerization under battery thermal runaway conditions to form a crosslinked spatial network structure which had excellent thermal and insulation properties, the composite separators prepared by the examples of the present application were applied to cells significantly improved the heat resistance of the composite separators, reduced the temperature of the composite separator, prevented thermal shrinkage of the base films and pore structure changes, significantly reduced the leakage current and voltage drop, and effectively prevented the deterioration of internal short circuits, thus offering a good thermal protective effect on the cells.

The above description is merely alternative examples of the present application and is not intended to limit the present application. For those skilled in the art, the present application may have various modifications and changes. Any modifications, equivalent substitutions, improvements, etc. made within the spirit and principles of the present application shall fall into the scope of the claims of the present application.

## Claims

1. A composite separator, wherein the composite separator comprises at least one base film layer and a self-healing functional layer laminated on a surface of the base film layer, wherein the self-healing functional layer contains a thermally cyclopolymerizable precursor material, and/or after the self-healing functional layer has self-healed, the precursor material forms a crosslinked polymer structure.

2. The composite separator according to claim 1, wherein the precursor material undergoes a cyclopolymerization reaction upon heating in an environment having a temperature of 80-500°C.

3. The composite separator according to claim 1 or 2, wherein the precursor material undergoes a cyclopolymerization reaction upon heating in an environment having a temperature of 120-250°C.

4. The composite separator according to any one of claims 1-3, wherein the precursor material includes at least one of an aryl ether, an arylalkene compound, and an arylsilane monomer.

5. The composite separator according to claim 4, wherein the aryl ether includes at least one of a diarylmethane sulfide compound, an aryl disulfide compound, and a fluorine-containing aryl vinyl ether compound;
and/or the arylalkene compound includes at least one of a fluorinated vinyl aryl ether, a γ-hydroxyalkyl enol ether, and a bromobenzene derivative;
and/or the arylsilane monomer includes at least one of [4-trifluorovinyl aryl ether]methyldiethoxysilane, 1,2,3,3,4,4-hexafluoro-1,2-bis[4-(dimethylsilyl)aryl ether]cyclobutane, and 1,1,3,3-tetramethyl-1,3-bis[4-trifluorovinyl aryl ether]disiloxane.

6. The composite separator according to any one of claims 1-5, wherein the self-healing functional layer further comprises at least one of a binder and a dispersant.

7. The composite separator according to claim 6, wherein in the self-healing functional layer, the mass ratio of the precursor material to the binder to the dispersant is (70-99.9):(0.1-25):(0.1-5);
and/or the binder includes at least one of shellac, butyl rubber, carboxymethyl cellulose, polyurethane, polystyrene, polyacrylate, an ethylene-vinyl acetate copolymer, a vinyl acetate resin, an acrylic resin, and chlorinated rubber;
and/or the dispersant includes at least one of an ethylene glycol-based dispersant, a polyol-based dispersant, aminooleyl oleate, a polycaprolactone polyol-polyethyleneimine block copolymer-based dispersant, an acrylate polymer-based dispersant, and a polyurethane- or polyester-based polymer dispersant.

8. The composite separator according to any one of claims 1-7, wherein the thickness of the self-healing functional layer is 0.01-20 µm;
and/or the thickness of the base film layer is 0.1-100 µm.

9. The composite separator according to claim 8, wherein the thickness of the self-healing functional layer is 1-10 µm;
and/or the thickness of the base film layer is 5-20 µm.

10. The composite separator according to any one of claims 1-9, wherein in the composite separator, the mass ratio of the self-healing functional layer to the base film layer is (0.1-1):1;
and/or the thermal shrinkage rate of the composite separator is reduced by 15-55% relative to the base film layer;
and/or the porosity of the composite separator is 30-70%;
and/or the gas permeability of the composite separator is 100-250 s/100 mL.

11. The composite separator according to any one of claims 1-10, wherein the base film layer is a multi-layer structure, and the self-healing functional layer is arranged between two adjacent base films and/or arranged on an outer surface of the outermost base film.

12. The composite separator according to claim 11, wherein the base film layer comprises a double-layer base film, and the self-healing functional layer is arranged on the outer surface of the base film layer.

13. A method for preparing a composite separator, comprising the following steps:
**preparing** a self-healing slurry, wherein the self-healing slurry comprises a thermally cyclopolymerizable precursor material; and
obtaining at least one base film and applying the self-healing slurry to a surface of the base film to form a self-healing functional layer, thereby obtaining a composite separator; and after the self-healing functional layer has self-healed, the precursor material forms a crosslinked polymer structure.

14. The method for preparing a composite separator according to claim 13, wherein the step of preparing the self-healing slurry comprises: after preparing the precursor material, mixing the precursor material with a binder, a dispersant, and a solvent to form the self-healing slurry.

15. The method for preparing a composite separator according to claim 14, wherein in the self-healing slurry, the mass ratio of the precursor material to the binder to the dispersant is (70-99.9):(0.1-25):(0.1-5);
and/or the precursor material includes at least one of an aryl ether, an arylalkene compound, and an arylsilane monomer;
and/or the binder includes at least one of shellac, butyl rubber, carboxymethyl cellulose, polyurethane, polystyrene, polyacrylate, an ethylene-vinyl acetate copolymer, a vinyl acetate resin, an acrylic resin, and chlorinated rubber;
and/or the dispersant includes at least one of an ethylene glycol-based dispersant, a polyol-based dispersant, aminooleyl oleate, a polycaprolactone polyol-polyethyleneimine block copolymer-based dispersant, an acrylate polymer-based dispersant, and a polyurethane- or polyester-based polymer dispersant;
and/or the solvent includes at least one of water, methanol, ethanol, NMP, acetone, tetrachloroethylene, dichloroethane, trichloroethane, anisole, propanol, butyl acetate, and tetrahydrofuran.

16. The method for preparing a composite separator according to claim 15, wherein the aryl ether includes at least one of a diarylmethane sulfide compound, an aryl disulfide compound, and a fluorine-containing aryl vinyl ether compound;
and/or the preparation of the arylalkene compound comprises the steps of: subjecting a halogenated aryl non-conjugated alkene compound to a lithium-halogen displacement reaction with an organolithium reagent to obtain an arylalkenyl lithium; and subjecting the arylalkenyl lithium to an electrophilic addition reaction with an electrophile to obtain the arylalkene compound;
and/or the preparation of the arylsilane monomer comprises the step of subjecting a silicate compound to a condensation reaction with a halogenated alkenyl ether compound in the presence of a catalyst to obtain the arylsilane monomer.

17. The method for preparing a composite separator according to claim 16, wherein the molar mass ratio of the halogenated aryl non-conjugated alkene compound to the organolithium reagent to the electrophile is (0.4-0.8):(0.1-0.4):(0.1-0.2);
and/or the ratio of the total mass of the silicate compound and the halogenated alkenyl ether compound to the mass of the catalyst is 1:(0.01-0.5);
and/or the halogenated aryl non-conjugated alkene compound comprises at least one of bromo-trifluorovinyloxybenzene, trifluorovinyl aryl ether, and perfluorocyclobutyl aryl ether;
and/or the organolithium reagent comprises at least one of butyllithium, lithium hexamethyldisilazide, phenyllithium, n-hexyllithium, lithium diisopropylamide, and n-butyllithium;
and/or the electrophile comprises at least one of hydrogen halide, halohydrocarbon, acyl halide, a carbonyl compound, boron hydride, diisobutylaluminum hydride, diisopropyl fluorophosphate, isopropyl methylfluorophosphate, and iodoacetic acid;
and/or the silicate compound comprises at least one of tetraethoxysilane, vinyltrimethoxysilane, triethoxysilane, methyl ether dimethylsilane, and triisopropylsilane;
and/or the halogenated alkenyl ether compound comprises at least one of trifluorovinyl aryl ether, diphenyl vinyl ether, brominated diphenylethylene ether, perfluoromethyl isopropyl ether, perfluoroisobutyl vinyl ether, hexafluoroisopropenyl methyl ether;
and/or the catalyst comprises at least one of an organic boride and an alkylaluminoxane.

18. A secondary battery, comprising a positive electrode, a negative electrode, a separator, and an electrolyte solution, wherein the separator comprises the composite separator according to any one of claims 1-12 or the composite separator prepared by the method according to any one of claims 13-17.

19. The secondary battery according to claim 18, wherein the secondary battery comprises at least one of a battery cell, a battery module, and a battery pack.

20. A electrical device, comprising the secondary battery according to either claim 18 or 19.
